# EUROPEAN PATENT APPLICATION

(11) **EP 1 995 864 A2**
(43) Date of publication of application: **26.11.2008**
(21) Application number: 08008446.0
(22) Date of filing: 05.05.2008
(51) Int. Cl.: H02N 2/02, H01L 41/09, G02B 7/08

(54) **Driving device**

(30) Priority: 07.05.2007 JP 2007122746
(71) Applicant: Sharp Kabushiki Kaisha, Osaka-shi, Osaka 545-8522 (JP)
(72) Inventor: Egawa, Tomohiro, Hiroshima 723-0052 (JP)
(74) Representative: Müller - Hoffmann & Partner

(57) **Abstract**

In order to provide a driving device that can be made more compact and shorter in height, a driving mechanism of a driving device according to the present invention includes: a flex movement member 1 that exhibits flex movement when excited by electronic control, and a first fixing member 14 for fixing a part of the flex movement member 1, both ends of which sandwich the part fixed by the fixing member 14 and bend. A first elastic member 12 and a second elastic member 22 are connected to the both ends of the flex movement member 1. The flex movement of the both ends of the flex movement member 1 causes distortion or bending in the first elastic member 12 and the second elastic member 22, so that a first frictional member 12 and a second frictional member 23 each serving as a contact section in contact with a lens barrel 5 move in a direction different from the flex movement direction of the both ends of the flex movement member 1. Thus, the lens barrel 5 is driven.

## Description

### FIELD OF THE INVENTION

The present invention relates to driving devices for driving driven bodies. The present invention relates to a driving device for driving a driven body by using an electromechanical transducer. For example, the invention relates to a driving device for use in driving such a lens in an optical apparatus as a camera lens.

### BACKGROUND OF THE INVENTION

Conventionally, a driving device has been proposed which drives a driven body by using an electromechanical transducer (piezoelectric element). Such a driving device is used for driving such a lens in an optical apparatus as a camera lens.

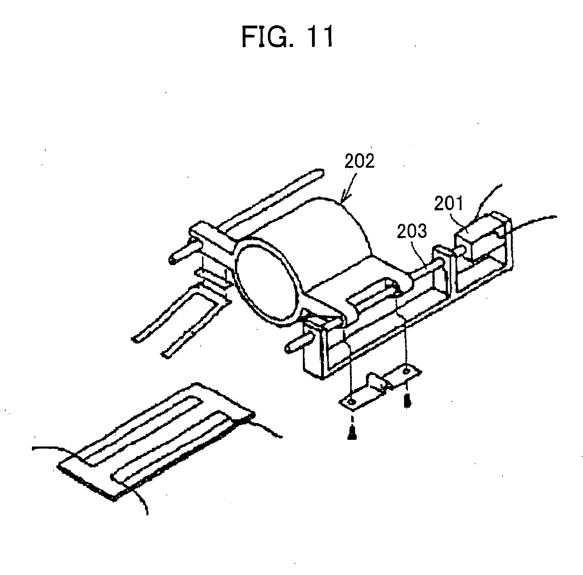

For example, Patent Document 1 (Japanese Unexamined Patent Application Publication No. 69070/1992; published on March 4, 1992) discloses a small and light driving device, aimed at reducing manufacturing costs, which enables precise positioning and movement control. FIG. 11 is a schematic perspective view of an arrangement of the conventional driving device disclosed in Patent Document 1.

As shown in FIG. 11, the conventional driving device includes a piezoelectric element 201, a lens barrel (driven body) 202, and a pole-like driving member 203. The piezoelectric element 201 is connected to an end of the driving member 203. The lens barrel (driven body) 202 is engaged in friction contact with the driving member 203.

According to the driving device shown in FIG. 11, the piezoelectric element 201 extends and contracts in a direction designated by the arrow, and the driving member 203 is thus driven in an optical axis direction. As a result, the lens barrel 202 engaged in friction contact with the driving member 203 is driven in the optical axis direction.

However, the conventional driving device disclosed in Patent document 1 suffers from the following problems.

That is, the conventional driving device is arranged such that: the piezoelectric element 201 is connected to an end of the driving member 203 in an optical axis direction; and the extending/ contracting direction of the piezoelectric element 201 is identical with the driving direction of the lens barrel 202. Thus, the driving member 203 and the piezoelectric element 201 are arranged in parallel (in a pile) in the driving direction. This undesirably makes it difficult for the driving device to be made shorter in height and more compact.

### SUMMARY OF THE INVENTION

The present invention was accomplished in view of the above problems. It is an object of the present invention to realize a driving device which can be made shorter in height and more compact.

In order to solve the above problems, a driving device according to the present invention includes a driving mechanism for driving a driven body, the driving mechanism including: a flex movement member that exhibits flex movement when excited by electronic control; a first fixing member for fixing a part of the flex movement member, both ends of which sandwich the part fixed by the first fixing member and bend; and a driving direction changing member, connected to the both ends of the flex movement member, which changes a movement direction to a direction different from a flex movement direction of the both ends of the flex movement member and makes contact with the driven body to drive the driven body in the movement direction thus changed.

According to the above arrangement, when the flex movement member is excited by electric control and exhibits flex movement, the both ends of the flex movement member between which the part fixed by the first fixing member is sandwiched bend. The bending causes bending in those parts of the driving direction changing member which are connected to the both ends of the flex movement member, thereby causing distortion or bending in the driving direction changing member. Due to the distortion or bending in the driving direction changing member, that part of the driving direction changing member which makes contact with the driven body moves in a plane direction orthogonal to a longitudinal direction defined by the both ends of the flex movement member. According to the above arrangement, the contact section moves in the plane direction orthogonal to the longitudinal direction, so that the driving direction changing member changes the movement direction to a direction different from the flex movement direction of the both ends of the flex movement member, and make contact with the driven body to drive the driven body in the movement direction thus changed. Specifically, the driving direction changing member functions as changing means for changing the flex movement direction of the flex movement member, which serves as a driving source, to the driving direction of the driven body.

According to the conventional driving device, the extending/contracting direction of the piezoelectric element, which severs as a driving source, is identical with the driving direction of the driven body. Therefore, the size of the driving device in the driving direction is determined in consideration of the sum of the size of the driven body in the driving direction and the size of the piezoelectric element in the driving direction. This undesirably makes it difficult for the conventional driving device to be made shorter in height.

However, the above arrangement does not invite such a conventional problem. Specifically, according to the above arrangement, the driving direction changing member changes the movement direction to a direction different from the flex movement direction of the both ends of the flex movement member, and makes contact with the driven body to drive the driven body in the movement direction thus changed (the driving direction of the driven body is different from the flex movement direction of the flex movement member as the driving source). This makes it possible to determine the size of the driving device in the driving direction in consideration of only the size of the flex movement member in the driving direction. Therefore, the above arrangement makes it possible to design the driving device so that the size of the driving device in the driving direction is small in comparison with that of a conventional driving device, thereby making it possible to make the driving device shorter in height.

Additional objects, features, and strengths of the present invention will be made clear by the description below. Further, the advantages of the present invention will be evident from the following explanation in reference to the drawings.

### BRIEF DESCRIPTION OF THE DRAWINGS

FIG. 1 is a top view of an arrangement of a driving device according to an embodiment of the present invention.
FIG. 2 shows an arrangement around a flex movement member viewed in a y direction of the driving device of FIG. 1.
FIG. 3 shows an arrangement around a flex movement member viewed in a y direction of a driving device according to another embodiment of the present invention.
FIG. 4 is a diagram showing an exemplary waveform of a driving voltage applied to the flex movement member of the driving device of FIG. 1.
FIG. 5 is an explanatory diagram explaining how a first elastic member and an end section (i.e., a part in friction engagement) of a first frictional member are driven in accordance with the driving voltage waveform illustrated in FIG. 4.
FIG. 6 is a graph showing exemplary waveforms of driving voltages respectively applied to a first flex movement member and a second flex movement member.
FIG. 7(a) is an explanatory diagram explaining how the first elastic member and the end section of the first frictional member are driven to oval movement in accordance with the driving voltage waveforms illustrated in FIG. 6.
FIG. 7(b) is an explanatory diagram explaining how the first elastic member and the end section of the first frictional member are driven to oval movement in accordance with the driving voltage waveforms illustrated in FIG. 6.
FIG. 7(c) is an explanatory diagram explaining how the first elastic member and the end section of the first frictional member are driven to oval movement in accordance with the driving voltage waveforms illustrated in FIG. 6.
FIG. 8 is a graph showing other exemplary waveforms of driving voltages respectively applied to the first flex movement member and the second flex movement member.
FIG. 9 is a diagram explaining how the first elastic member and the end section of the first frictional member are driven along an arc in accordance with the driving voltage waveforms illustrated in FIG. 8.
FIG. 10(a) is a plan view of an arrangement of a bimorph piezoelectric element.
FIG. 10(b) is a side view of the arrangement of the bimorph piezoelectric element.
FIG. 10(c) shows how the piezoelectric element exhibits flex movement.
FIG.11 is a schematic perspective view of an arrangement of a conventional driving device disclosed in Patent Document 1.

### DESCRIPTION OF THE EMBODIMENTS

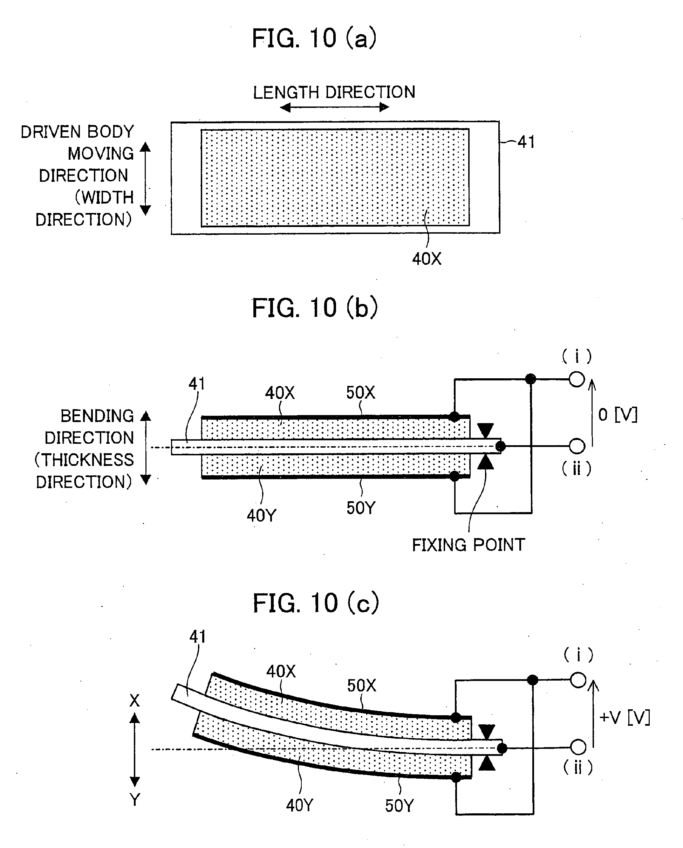

The driving device of the present invention includes a flex movement member and controlling means for electronically controlling flex movement of the flex movement member. According to the present driving device, the flex movement member exhibits flex movement when excited by electronic control of the controlling means. Explained first is the flex movement member that exhibits flex movement when excited by electronic control. A bimorph piezoelectric element illustrated in FIGS. 10(a) to 10(c) is an exemplary flex movement member.

FIGS. 10(a) to 10(c) show an arrangement of a bimorph piezoelectric element. FIG. 10(a) is a plan view. FIG. 10(b) is a side view. FIG. 10(c) shows how the piezoelectric element exhibits flex movement.

The piezoelectric element illustrated in FIGS. 10(a) to 10(c) includes two piezoelectric material layers 40X and 40Y and a shim 41 which is made of metal. The piezoelectric element has a pressure-attached three-layer structure in which the shim 21 is sandwiched between the two piezoelectric material layers 40X and 40Y. Two electrodes 50X and 50Y further sandwich the three-layer structure. The two electrodes 50X and 50Y are connected with the controlling means (not shown). Furthermore, one end of the shim 41 is fixedly supported (see "FIXING POINT" indicated by black triangle marks in FIGS. 10(b) and 10(c)). The direction in which the layers are built in the three-layer structure formed from the piezoelectric material layers 40X and 40Y and the shim 41 is referred to as "THICKNESS DIRECTION" in FIGS. 10(a) to 10(c). The direction in which the piezoelectric element extends is referred to as "LENGTH DIRECTION" in the plan view of FIG. 10(a), and the direction which extends orthogonally to the length direction is referred to as ""WIDTH DIRECTION". Furthermore, with regard to the thickness direction, the direction toward the piezoelectric material layer 40X is referred to as "X direction", and the direction toward the piezoelectric material layer 40Y is referred to as "Y direction".

The piezoelectric element illustrated in FIGS. 10(a) and 10(b) is set so as to bend in the thickness direction when voltage is applied to the electrodes 50X and 50Y by the controlling means.

The piezoelectric material layer 40X is, for example, polarized so as to: contract when the voltage between the electrode 50X and the shim 41 becomes positive; and extend when the voltage between the electrode 50X and the shim 41 becomes negative. Comparatively, the piezoelectric material layer 40Y is polarized so as to: extend when the voltage between the electrode 50Y and the shim 41 becomes positive; and contract when the voltage between the electrode 50Y and the shim 41 becomes negative.

Explained now is the case in which voltage is applied by the controlling means to the piezoelectric material layers 40X and 40Y polarized as above. As illustrated in FIG. 10(c), the controlling means applies positive voltage between the electrode 50X and 50Y, and the shim 41 (i.e., between (i) and (ii) in FIG. 10(c)). The shim 41 is fixed at the point indicated by the black triangle marks. In this case, as FIG. 10(c) shows, the piezoelectric element bends in the X thickness direction. In contrast, in the case where the controlling means applies negative voltage between (i) and (ii), the piezoelectric element bends in the Y thickness direction (not shown).

As described above, the piezoelectric element illustrated in FIGS. 10(a) to 10(c) is set so as to bend in response to the voltage applied by the controlling means. It should be noted that the flex movement member contained in the driving device of the present invention is not limited to the piezoelectric element illustrated in FIGS. 10(a) to 10(c), and may be any member having a structure in which flex movement can be controlled electronically. For example, a monomorph piezoelectric element which includes one piezoelectric material layer and a shim can be used as a flex movement member. The workings of a monomorph piezoelectric element are substantially the same as the workings of a bimorph piezoelectric element. Thus, the monomorph piezoelectric element can be bent under electric control.

As described above, the flex movement member contained in the driving device of the present invention refers to any member that can be bent under electric control such as application of voltage. The structure of the flex movement member is not subject to any limit in terms of measurements such as thickness, length and width or shapes.

Hereinafter, for simplicity of explanation, the flex movement member which exhibits flex movement when excited by electric control is referred to simply as "flex movement member".

Further, in the present specification, in the case where the flex movement member is disposed inside the driving device, (a) the direction in which the driven body moves is termed "driven body moving direction" or "width direction (of the flex movement member)", (b) the direction in which the flex movement member bends is termed "bending direction" or "thickness direction (of the flex movement member)", and (c) the direction which extends orthogonally to the driven body moving direction (i.e. the width direction) and to the bending direction (i.e. the thickness direction) is termed "length direction (of the flex movement member)". These terms are not subject to the measurements of the flex movement member or the location of the fixed point of the flex movement member.

### [First Embodiment]

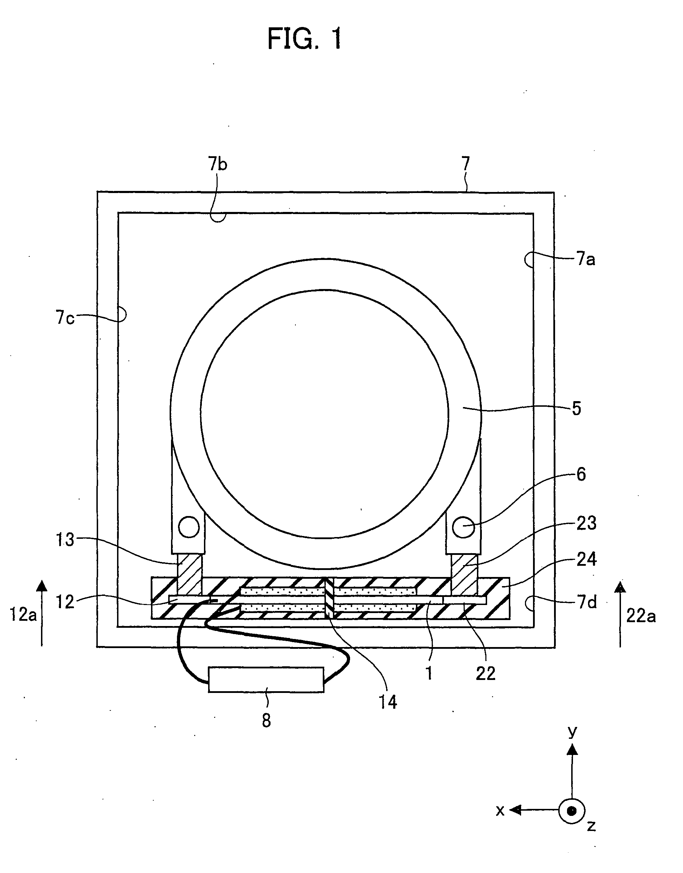

One embodiment of the present invention will be explained below with reference to FIG. 1. FIG. 1 is a top view of an arrangement of the driving device (hereinafter referred to as "present driving device") according to the present embodiment. The driving device illustrated in FIG. 1 is an embodiment most preferably applicable to a focus adjusting mechanism of a compact camera module.

First, as illustrated in FIG. 1, the present driving device includes a flex movement member 1, a first elastic member (first driving direction changing member) 12, a second elastic member (second driving direction changing member) 22, a first frictional member (first driving direction changing member; contact section) 13, a second frictional member (second driving direction changing member; contact section) 23, a first fixing member 14, a second fixing member 24, a lens barrel (driven body) 5, a guide shaft 6, a camera module housing 7, and a driving circuit (controlling means) 8.

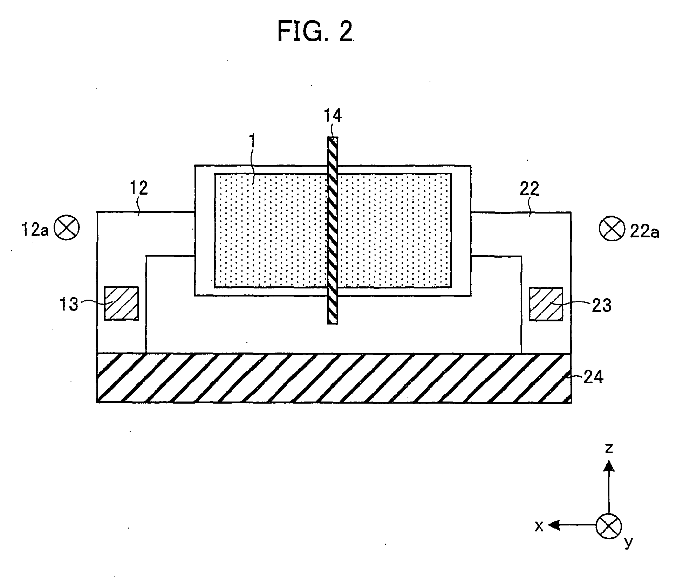

FIG. 2 shows an arrangement around the flex movement member viewed in the y direction of FIG. 1. As illustrated in FIG. 2, the first fixing member 14 is disposed on the center of gravity of the flex movement member 1, and is fixed to the camera module housing 7 by means of adhesion, engagement, or the like.

The first elastic member 12 and the second elastic member 22 are connected to the flex movement member 1. The first frictional member 13 is connected to the first elastic member 12, and the second frictional member 23 is connected to the second elastic member 22.

The first elastic member 12 and the second elastic member 22 are connected to the second fixing member 24. The second fixing member 24 fixes a base end of the first elastic member 12 and a base end of the second elastic member 22. However, the locations in the second fixing member 24 at which the first elastic member 12 and the second elastic member 22 are fixed are not limited to this. The locations in the second fixing member 24 at which the first elastic member 12 and the second elastic member 22 are fixed can be set in accordance with the driving direction of the lens barrel 4, which driving direction differs from the flex movement direction of the first flex movement member 1. Specifically, the present driving device can change, depending on the locations in the second fixing member 24 at which the first elastic member 12 and the second elastic member 22 are fixed, the driving direction of the lens barrel 4 to a desired direction different from the flex movement direction.

The first elastic member 12 and the second elastic member 22 are made of a material having low elasticity such as metal or resin. Further, according to the present driving device, the lens barrel 5 is set so as to move in an optical axis direction when the first frictional member 13 and the second frictional member 23 are engaged in (friction) contact with the lens barrel 5. Therefore, the material for the first frictional member 13 and the second frictional member 23 may be metal, resin, carbon fiber or the like, and is determined in accordance with the desired coefficient of friction with the lens barrel 5.

Further, the first fixing member 14 and the second fixing member 24 may be integrated with the camera module housing 7.

Further provided in the present driving device is two guide shafts 6 that guide the lens barrel 5 along the optical axis direction. Provided in the lens barrel 5 is hole sections through which the guide shafts 6 are respectively inserted. Each of the guide shafts 6 is a pole-like member extending in the optical axis direction, and is fixed to a bottom section (or a top section) of the camera module housing 7. The guide shaft 6 further serves to support the lens barrel 5 so that the first frictional member 13 and the second frictional member 23 are engaged in friction contact with the lens barrel 5. According to the present driving device, the lens barrel 5 is set so as to move in the optical axis direction along the guide shaft 6 when the first frictional member 13 and the second frictional member 23 are engaged in friction contact with the lens barrel 5. It should be noted that, according to the present driving device, the lens barrel 5 does not necessarily incorporate a hole section through which the guide shaft 6 is inserted. Alternately, a separate hole member having a hole section may be attached to the lens barrel. Furthermore, another arrangement may also be possible in which a friction adjusting member for gaining a desired coefficient of friction is connected (or glued) to the lens barrel 5 at the point of friction engagement with the frictional member 3. Therefore, the lens barrel in the present embodiment encompasses an arrangement in which the above hole member and/or the friction adjusting member is/are provided.

The flex movement member 1 is connected with the driving circuit 8. The driving circuit 8 excites the flex movement member 1 by applying voltage or the like thereto so that the flex movement member 1 exhibits flex movement. The driving circuit 8 is controlled by a superordinate controlling circuit (not shown), and outputs voltage corresponding to a driving waveform described below to the flex movement member 1. It should be noted that the "controlling means" refers to means which includes the driving circuit 8 and a controlling circuit superordinate thereto.

Electric control of flex movement of the flex movement member 1 is not necessarily performed by the use of voltage. For example, in the case where the flex movement member 1 is formed from bimetal or shape-memory alloy and excited to exhibit flex movement by means of heat, electric control of flex movement of the flex movement members 1 is performed by increasing or decreasing current. In this case, the heat generated by part of the flex movement member 1 is controlled by increasing or decreasing current flowing through the flex movement member 1. As a result, the temperature of the flex movement member 1 can be controlled. Alternatively, in the proximity of the flex movement member 1, heat generating means may be provided which is formed from a heating wire such as a Nichrome wire or a kanthal wire and generates heat when current passes therethrough. The heat generated by the heat generating means is controlled by increasing or decreasing the current flowing through the heat generating means. As a result, the temperature of the flex movement member 1 can be controlled. Furthermore, in the case where the flex movement member 1 is formed, for example, from a magnetostrictor and excited to exhibit flex movement by means of a magnetic field, magnetic field generating means is provided such as an electromagnet which generates a magnetic field when current is provided. The magnetic field applied to the flex movement member 1 is controlled by increasing or decreasing the current.

Further, an optical element such as a lens or the like is set in the lens barrel 5 (not shown in FIG. 1). Disposed in the bottom section of the lens barrel 5 is an image sensor such as a CCD.

According to the present driving device, the lens barrel 5 is driven to move along the guide shaft 6 by the use of the driving mechanism composed of the flex movement member 1, the first elastic member 12, the second elastic member 22, the first frictional member 13, and the second frictional member 23. By means of the driving mechanism, the optical element set in the lens barrel 5 is driven to move in the optical axis direction, and focus adjustment is thereby made. Further, according to the present embodiment, the driven body moving direction in which the lens barrel 5 moves is synonymous with the optical axis direction. According to the present specification, the direction toward which the optical element set in the lens barrel 5 images an object (i.e. the direction of a straight line that connects the lens barrel 5 and the object) is termed "optical axis direction".

The camera module housing 7 encases the flex movement member 1, the first elastic member 12, the second elastic member 22, the first frictional member 13, the second frictional member 23, the lens barrel 5, and the guide 6. According to the present driving device, the camera module housing 7 is a rectangular parallelepiped in shape and has side walls 7a to 7d. As illustrated in FIGS. 1 and 2, the flex movement member 1 is disposed along the side wall 7d of the camera module housing 7.

As described above, according to the present driving device, the flex movement member 1 is disposed along the side wall 7d of the camera module housing 7. Consequently, the space in the camera module housing 7 can be used efficiently for disposition of the driving mechanism, and the driving device can thereby be made more compact. Further, unlike the conventional driving device, the present driving device is not arranged such that the piezoelectric element 201 and the driving member 202 are in parallel with each other in the optical axis direction. Consequently, the device can be made shorter in height.

According to the present driving device, the flex movement member 1, the first elastic member 12, the second elastic member 22, the first frictional member 13, and the second frictional member 23 are arranged so that the lens barrel 5 is driven to move in the direction orthogonal to the flex movement direction of the flex movement member 1 (in the z-axis direction).

The flex movement member 1 exhibits flex movement in the y-axis direction illustrated in FIGS. 1 and 2. The flex movement generates, in those parts of the first elastic member 12 and the second elastic member 22 which are connected to the flex movement member, movement vectors 12a and 22a that cause movement in the y-axis direction, respectively. The movement vectors 12a and 22a cause distortion or bending in the first elastic member 12 and the second elastic member 22, respectively. The distortion or bending causes the first frictional member 13 and the second frictional member 23, respectively mounted on the first elastic member 12 and the second elastic member 22, to make contact with the lens barrel 5 while moving in an in-plane (yz plane) direction orthogonal to the longitudinal direction (x-axis direction) of the flex movement member 1. This contact causes the lens barrel 5 to be driven in the z-axis direction. The "movement in the plane (yz plane) direction orthogonal to the longitudinal (x-axis direction) of the flex movement member 1" here means a movement which can be observed when projected on a plane orthogonal to the flex moving direction. A specific principle for driving the lens barrel 5 will be explained later. It should be noted that the "longitudinal direction" refers to a direction defined by both ends of the flex movement member 1 to which the first elastic member 12 and the second elastic member 22 are connected (i.e., a direction that connects both ends).

The first elastic member 12, the second elastic member 22, the first frictional member 23, and the second frictional member 23 function as changing means for changing the flex movement direction (y-axis direction) of the flex movement member 1, which serves as a driving source, to a movement direction different from the flex movement direction, and for driving the lens barrel 5.

It should be noted that the "driving direction changing member" refers to a member including the elastic members (the first elastic member 12 and the second elastic member 22) and the frictional members (the first frictional member 13 and the second frictional member 23). In the present driving device, the elastic members and the frictional members are separate members. However, in the present invention, the driving direction changing member is not limited to the arrangement in which the elastic members and the frictional members are separate members.

The first fixing member 14 is disposed on the center of gravity of the flex movement member 1. Consequently, those parts of the first elastic member 12 and the second elastic member 22 which are connected to the flex movement member 1 are driven to exhibit the same movement symmetrically. Therefore, among the movements due to the distortion or bending caused in the first elastic member 12 and the second elastic member 22, the movement components in the x-axis direction can cancel each other. Thus, the lens barrel 5 can be driven stably.

According to the present embodiment, the driven body moving direction is synonymous with the optical axis direction. Further, as illustrated, the flex movement member 1 serving as a driving source is arranged along the side wall of the camera module housing 7 taking the shape of a rectangular parallelepiped. These features make it possible for the driving device of the present invention to be made more compact. These features also make it unnecessary to pile up the driving member 203 and the piezoelectric element 201 in the optical direction as is conventionally done, thereby effectively making the driving device of the present invention shorter in height.

The following explains, in accordance with the present driving device, the waveform of a driving voltage supplied from the controlling means including the driving circuit 8, and the principle of operation for driving the lens barrel 5 in the optical axis direction in accordance with the driving voltage waveform.

### (Principle of Operation 1)

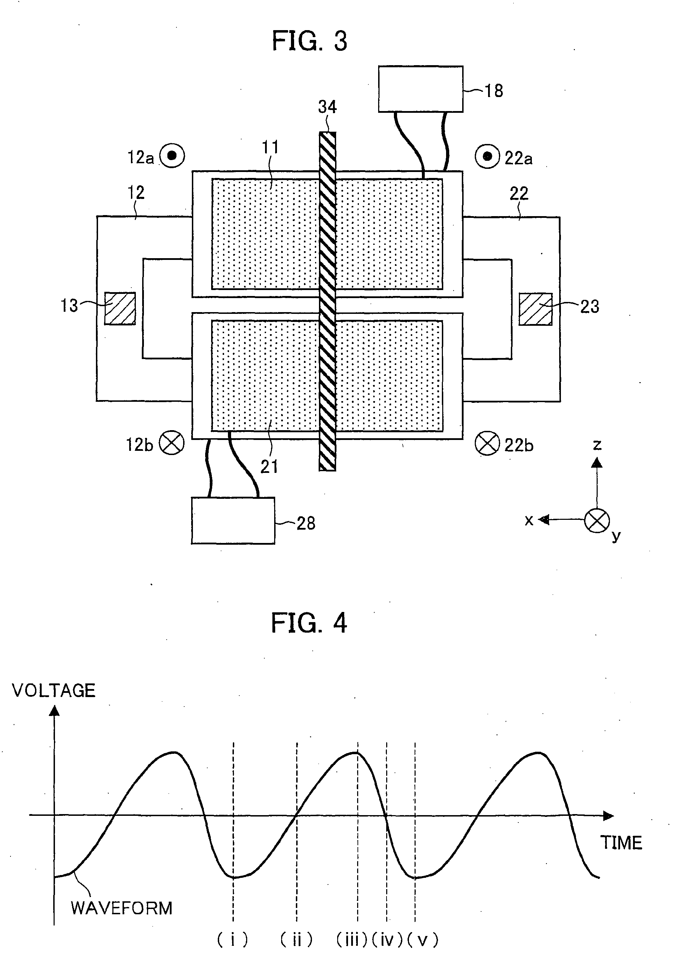

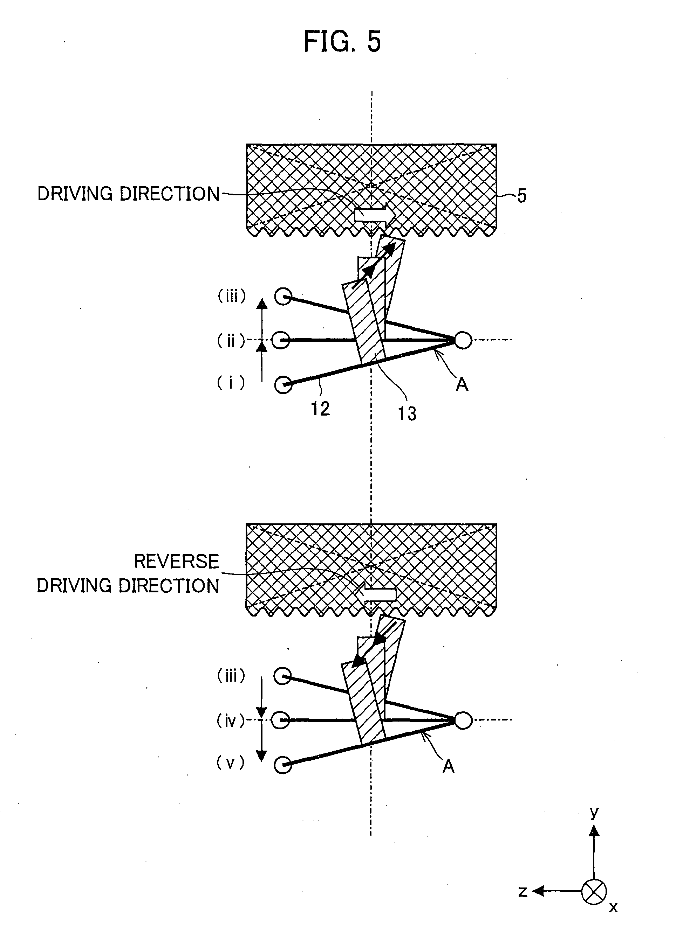

FIG. 4 is a graph showing an exemplary waveform of a driving voltage applied to the flex movement member 1 of the present driving device. FIG. 5 is an explanatory diagram explaining how the first elastic member 12 and an end section (i.e., a part in friction engagement) of the first frictional member 13 are driven in accordance with the driving voltage waveform illustrated in FIG. 4. FIG. 4 shows the present driving device viewed in the x-axis direction of FIG. 1. The driving of the the second elastic member 22 and the end section of the second frictional member 23 is identical with the driving illustrated in FIG. 5, and therefore will not be explained below. Further, in FIG. 5, that surface of the first elastic member 12 which faces the first frictional member 13 is indicated as a surface A.

As FIG. 4 shows, the waveform of the driving voltage applied to the flex movement member 1 takes the shape of a sawtooth. The sawtooth driving voltage waveform is realized by inputting a rectangular-wave driving voltage into the driving circuit 8. Specifically, when the driving circuit 8 receives a rectangular-wave driving voltage (from the superordinate controlling circuit of the driving circuit 8), the driving voltage waveform is deformed due to the response of the flex movement member 1 to driving, so that the driving circuit 8 outputs a sawtooth driving voltage. It should be noted that the driving circuit 8 may output not only a sawtooth driving voltage but also any driving voltage that periodically alternates between positive charge and negative charge. The waveform of a driving voltage to be outputted by the driving circuit 8 can be set appropriately in accordance with the design of an incoming rectangular wave. The waveform of a driving voltage to be inputted into the driving circuit 8 may take the shape of a sawtooth. FIG. 5 shows movement positions corresponding to moments (i) to (v) in the driving voltage waveform illustrated in FIG. 4.

When the flex movement member 1 is driven in accordance with the driving voltage waveform illustrated in FIG. 4, the surface A is shifted in the numerical order (i) to (ix). Specifically, the surface A lies: in the position (i) of FIG. 5 at the moment (i) of FIG. 4; in the position (ii) of FIG. 5 at the moment (ii) of FIG. 4; in the position (iii) of FIG. 5 at the moment (iii) of FIG. 4; in the position (iv) of FIG. 5 at the moment (iv) of FIG. 4; in the position (v) of FIG. 5 at the moment (v) of FIG. 5. Since the surface A is shifted through the transition from (i) to (ix) illustrated in FIG. 5, the end section (i.e. the part in friction engagement) of the first frictional member 13 is driven as illustrated. The movement direction in which the end section of the first frictional member 13 is shifted when the first frictional member 13 is in contact with the lens barrel 5 is termed "driving direction".

The end of the first frictional member 13 is driven in accordance with the sawtooth driving voltage waveform illustrated in FIG. 4. Consequently, the velocity in the driving direction and the velocity in the reverse driving direction are different (i.e. the velocity in the transition from (i) to (iii) is comparatively slow, whereas the velocity in the transition from (iii) to (v) is comparatively fast).

Furthermore, a difference can be generated between the acceleration of the first frictional member 13 in the driving direction and the acceleration of the first frictional member 13 in the reverse driving direction by suitably setting the driving voltage waveform. Specifically, the driving voltage waveform can be set so that the acceleration in the transition from (i) to (iii) (i.e. in the driving direction) is comparatively low, whereas the acceleration in the transition from (iii) to (v) (i.e. in the reverse driving direction) is comparatively high. Further, in the position (iii), by pressing harder against the lens barrel 5, larger friction can be obtained. When the acceleration of the movement in the driving direction is comparatively low and the acceleration of the movement in the reverse driving direction is comparatively high, the driving force in the driving direction and the driving force in the reverse driving direction are different. As above, the coefficient of friction of the first frictional member 13 and the like can be adjusted. Specifically, concerning the driving direction, the force applied to the point of contact between the first frictional member 13 and the lens barrel 5 does not exceed the static friction between the first frictional member 13 and the lens barrel 5. In contrast, the coefficient of friction of the first frictional member 13 and the like, can be adjusted so that, concerning the reverse driving direction, the force applied to the point of contact between the first frictional member 13 and the lens barrel 5 does exceed the static friction between the first frictional member 13 and the lens barrel 5. Thus, the end section of the first frictional member 13 slides on the lens barrel 5. As a result, a difference is generated between the driving force in the driving direction and the driving force in the reverse driving direction, and the lens barrel 5 is therefore driven in the driving direction. Further, concerning the driving of the lens barrel 5 in the reverse driving direction, the driving can be realized according to the same principle.

The present driving device can employ an arrangement in which the first frictional member 13 can be pressed against the lens barrel 5 with use of the spring. Alternatively, another arrangement is possible in which the flex movement member 1 is drawn toward the lens barrel 5 (i.e. in the direction of the driven body) to a predetermined extent and then fixed. Further alternatively, another arrangement is possible in which the guide shaft 6 is fixed so that the lens barrel 5 is pressed against the frictional member 3. According to the arrangements described above, the end of the friction member 3 is positioned so as to be in constant contact with the lens barrel 5 due to the advance pressure.

Furthermore, according to the arrangements described above, the end of the first frictional member 13 can be linearly shifted. (In this case, the flex movement members 1A, 1B, the elastic member 2, the frictional member 3 and the like are distorted.) It is needless to say that, even in the case, the lens barrel 5 can be driven in accordance with a principle similar to the above principle.

### [Second Embodiment]

The following explains another embodiment of the present invention with reference to FIG. 3. FIG. 3 shows an arrangement around flex movement members in a driving device of the present embodiment (the driving device being hereinafter referred to as "present driving device").

The concept of driving the present driving device is the same as that explained above in the First Embodiment. The present driving device is different from the First Embodiment in that the present driving device includes two flex movement members disposed along only one side wall of the camera module housing 7.

As FIG. 3 shows, the first flex movement member 11 and the second flex movement member 21 are disposed along only one of the side wall surfaces of the camera module housing 7. Specifically, the first flex movement member 11 and the second flex movement member 21 are disposed along only the side wall 7d of the side walls 7a to 7d of the camera module housing 7. The first flex movement member 11 and the second flex movement member 21 are serially disposed in the z-axis direction (in the optical axis direction), and are fixed by the fixing member 34. The fixing member 34 is disposed on the center of gravity of the first and second flex movement members 11 and 21.

Each of the first flex movement member 11 and the second flex movement member 21 has two ends between which the fixing member 34 is sandwiched and to which the first elastic member 12 and the second elastic member 22 are respectively connected. The first elastic member 12 connects one end of the first flex movement member 11 to one end of the second flex movement member 21, and the second elastic member 22 connects the other end of the first flex movement member 11 to the other end the second flex movement member 21. The first elastic member 12 and the second elastic member 22 includes the first frictional member 13 and the second frictional member 23, respectively. It should be noted that the fixing member 34 may be integrated with the camera module housing 7.

Further, the first flex movement member 11 and the second flex movement member 21 are connected to a first driving circuit 18 and a second driving circuit 28, respectively. The first driving circuit 18 excites the first flex movement member 11 by applying a voltage or the like thereto so that the first flex movement member 11 exhibits flex movement. The second driving circuit 28 excites the second flex movement member 21 by applying a voltage or the like thereto so that the second flex movement member 21 exhibits flex movement.

In the present driving device, the lens barrel 5 is driven in the optical axis direction by a driving mechanism including the first flex movement member 11, the second flex movement member 21, the first elastic member 12, the second elastic member 22, the first frictional member 13, and the second frictional member 23.

The first flex movement member 11 and the second flex movement member 21 exhibits flex movements in the y-axis direction illustrated in FIG. 3. These flex movements are opposite to each other. The flex movement of the flex movement member 11 generates, in those parts of the first elastic member 12 and the second elastic member 22 which are connected to the first flex movement member 11, movement vectors 12a and 22a that cause movements in the y-axis direction, respectively. Further, the flex movement of the flex movement member 21 generates, in those parts of the first elastic member 12 and the second elastic member 22 which are connected to the second flex movement member 21, movement vectors 12b and 22b that cause movements in the y-axis direction, respectively. In this case, the movement vectors 12a and 22a and the movement vectors 12b and 22b are in opposite directions. The movement vectors 12a and 22a and the movement vectors 12b and 22b, which are in opposite directions, cause distortion or bending in the first elastic member 12 and the second elastic member 22. The distortion or bending causes the first frictional member 13 and the second frictional member 23, respectively mounted on the first elastic member 12 and the second elastic member 22, to make contact with the lens barrel 5 while moving in an in-plane (yz plane) direction orthogonal to the longitudinal direction (x-axis direction) of the first and second flex movement members 11 and 21. This contact causes the lens barrel 5 to be driven in the z-axis direction. A specific principle for driving the lens barrel 5 of the present driving device will be explained later.

Further, the fixing member 34 is disposed on the center of gravity of the first and second flex movement members 11 and 21. Consequently, those parts of each of the first elastic member 12 and the second elastic member 22 which are connected to the first and second flex movement members 11 and 21 are driven to exhibit the same movement symmetrically. Therefore, among the movements due to the distortion or bending caused in the first elastic member 12 and the second elastic member 22, the movement components in the x-axis direction can cancel each other. Thus, the lens barrel 5 can be driven stably.

The first flex movement member 11 and the second flex movement member 21 are opposite in flex movement to each other. However, the first flex movement member 11 and the second flex movement member 21 are not limited to such a relationship, and may be related in flex movement to each other in any manner as long as the first and second frictional members 13 and 23 in contact with the lens barrel 5 can be driven.

The following explains, in accordance with the present driving device, the waveforms of driving voltages supplied from the controlling means including the first and second driving circuits 18 and 28, and the principle of operation for driving the lens barrel 5 in the optical axis direction in accordance with the driving voltage waveforms.

### (Principle of Operation 2)

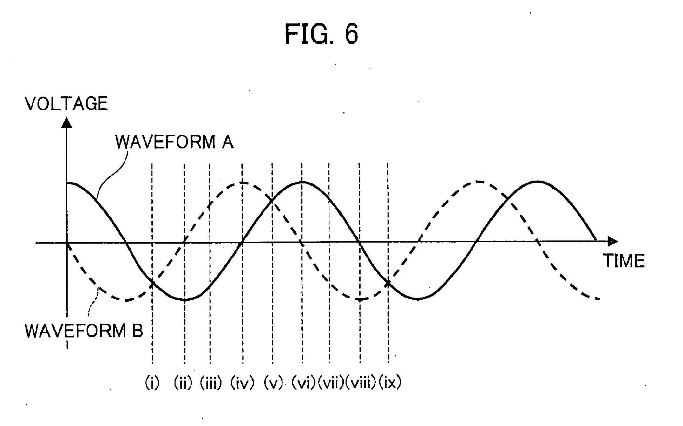

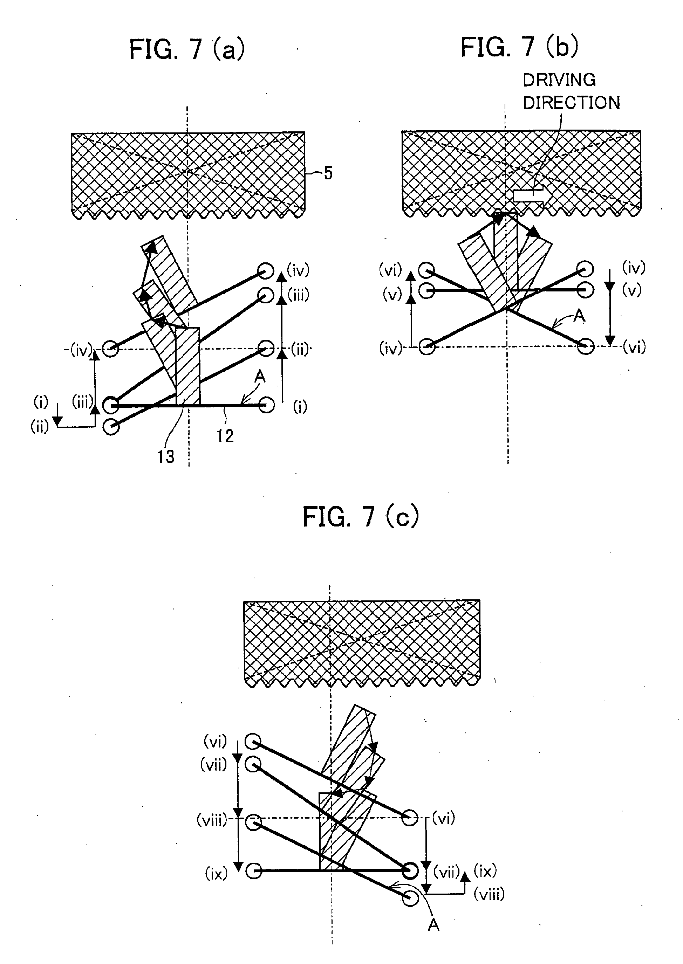

Explained first is an exemplary operation for driving the lens barrel 5, by use of the first frictional member 13 and the second frictional member 23, to move in the optical axis direction. According to the foregoing operation, ends (i.e. parts in friction engagement with the lens barrel 5; contact sections) of the first and second frictional members 13 and 23 are driven to oval movement by exciting the first flex movement and the second flex movement so that the first flex movement member and the second flex movement member exhibit flex movement. FIG. 6 shows exemplary waveforms of driving voltages respectively applied to the first flex movement member 11 and the second flex movement member 21. FIGS. 7(a) to 7(c) are explanatory diagrams explaining how the first elastic member 12 and an end section of the first frictional member 13 are driven to oval movement in accordance with the driving voltage waveforms illustrated in FIG. 6. FIG. 7 shows the present driving device viewed in the x-axis direction. The driving of the second elastic member 22 and the end section of the second frictional member 23 is identical with the driving illustrated in FIGS.7(a) to 7(c), and therefore will not be explained below. Further, in FIGS. 7(a) to FIG.7(c), that surface of the first elastic member 12 which faces the first frictional member 13 is indicated as a surface A.

According to FIG. 6, the waveform of the driving voltage applied to the first flex movement member 11 is termed "waveform A", whereas the waveform of the driving voltage applied to the second flex movement member 21 is termed "waveform B". Additionally, the driving voltage waveforms A and B are outputted from the first driving circuits 18 and the second driving circuit 28, respectively. As illustrated in FIG. 6, the waveforms A and B take the shape of a sine wave, and shift in phase from each other by 90 degrees. FIGS. 7(a) to 7(c) show the positions of the surface A with respect to moments (i) to (ix) in the waveforms A and B illustrated in FIG. 6.

As illustrated in FIG. 7(a) to 7(c), when the first flex movement member 11 and the second flex movement member 21 are driven in accordance with the waveforms A and B, the surface A is shifted in the numerical order from (i) to (ix). Specifically, the surface A lies: in the position (i) of FIG. 7 (a) at the moment (i) of FIG. 6; in the position (ii) of FIG. 7 (a) at the moment (ii) of FIG. 6; in the position (iii) of FIG. 7 (a) at the moment (iii) of FIG. 6; in the position (iv) of FIG. 7 (a) and FIG.7 (b) at the moment (iv) of FIG. 6; in the position (v) of FIG. 7 (b) at the moment (v) of FIG. 6; in the position (vi) of FIG. 7 (b) and FIG.7 (c) at the moment (vi) of Fig. 6; in the position (vii) of Fig. 7 (c) at the moment (vii) of FIG. 6; in the position (viii) of FIG. 7(c) at the moment (viii) of FIG. 6; and in the position (ix) of FIG. 7 (c) at the moment (ix) of FIG. 6. Since the surface A is shifted through the transition from (i) to (ix) illustrated in FIGS. 7(a) to 7(c), the end section of the first frictional member 13 is driven to move along the oval shape as illustrated in FIGS. 7(a) to 7(c). When the movement direction in which the end section of the first frictional member 13 is shifted when the first frictional member 13 is in contact with the lens barrel 5 is termed "driving direction", the lens barrel 5 is driven by the scratch of the first frictional member 13 in the driving direction, which direction is determined by the direction in which the end section turns.

According to the examples illustrated in FIG. 6 and FIGS .7(a) to 7(c), the first frictional member 13 is disposed so as to alternately come into contact with and come off the lens barrel 5 due to the rotational movement (i.e. since the end of the first frictional member 13 is driven to make the oval movement). However, the present invention is not limited to the example described above.

The present driving device can employ an arrangement in which the end of the first frictional member 13 is in constant contact with the lens barrel 5. For example, the first frictional member 13 can be pressed against the lens barrel 5 with use of the spring. Alternatively, the first flex movement members 11 and the second flex movement member 21 can be drawn toward the lens barrel 5 (i.e. in the direction of the driven body) to a predetermined extent and then fixed. Further alternatively, the guide shaft 6 can be fixed so that the lens barrel 5 is pressed against the first frictional member 13. According to the arrangements described above, the end of the first frictional member 13 is positioned so as to be in constant contact with the lens barrel 5 due to the advance pressure.

Furthermore, according to the arrangement, the first frictional member 13 is excited so that the end thereof is linearly shifted, alternately in the driving direction and in the reverse direction (i.e. the reverse driving direction) instead of turning along the oval shape. (In this case, the first flex movement member 11, the second flex movement member 21, the first elastic member 12, the second frictional member 13, and the like are distorted.) The levels of pressure applied by the first frictional member 13 against the lens barrel 5 are naturally different between (a) the period when the end of the first frictional member 13 is shifted in the driving direction and (b) the period when the end of the first frictional member 13 is shifted in the reverse driving direction. More specifically, the pressure that the end of the first frictional member 13 applies against the lens barrel 5 becomes high when the end of the first frictional member 13 is shifted in the driving direction, whereas the pressure that the end of the first frictional member 13 applies against the lens barrel 5 becomes low when the end of the first frictional member 13 is shifted in the reverse driving direction.

As a result, a difference is generated in static friction between the first frictional member 13 and the lens barrel 5. This makes it possible to adjust the coefficient of friction and the advance pressure of the first frictional member 13 so that (a) the end of the first frictional member 13 does not slide on the lens barrel 5 when the lens barrel 5 is shifted in the driving direction and (b) the end of the first frictional member 13 slides on the lens barrel 5 when the lens barrel is shifted in the reverse driving direction. Although the lens barrel 5 may be shifted back to some extent when the end of the first frictional member 13 is shifted in the reverse driving direction, the lens barrel 5 is, on the whole, driven to move in the driving direction.

Alternatively, the coefficient of friction and the advance pressure of the first frictional member 13 can be adjusted so that the end of the first frictional member 13 slides on the lens barrel 5 both in the driving direction and in the reverse driving direction. In this case, the driving force applied to the lens barrel 5 is determined by the dynamic friction both when the lens barrel 5 is shifted in the driving direction and when the lens barrel 5 is shifted in the reverse driving direction. Even in this case, the levels of pressure applied by the first frictional member against the lens barrel 5 are different. The dynamic friction generated when the first frictional member 13 is shifted in the driving direction is greater than the dynamic friction generated when the first frictional member 13 is shifted in the reverse driving direction. Therefore, although the lens barrel 5 may be shifted back in the reverse driving direction to some degree, the lens barrel 5 is, on the whole, driven in the driving direction.

According to the example described above, the driving voltage waveforms take the shape of a sine wave, and shift in phase from each other by 90 degrees. However, the driving voltage waveforms are not particularly limited to a sine wave, and the phases shift amount is not limited to 90 degrees.

### (Principle of Operation 3)

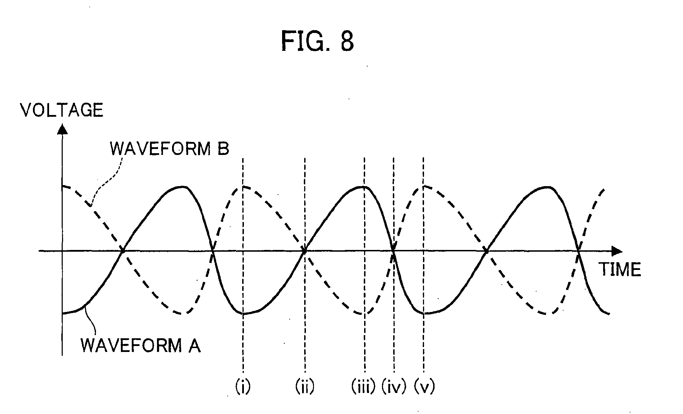

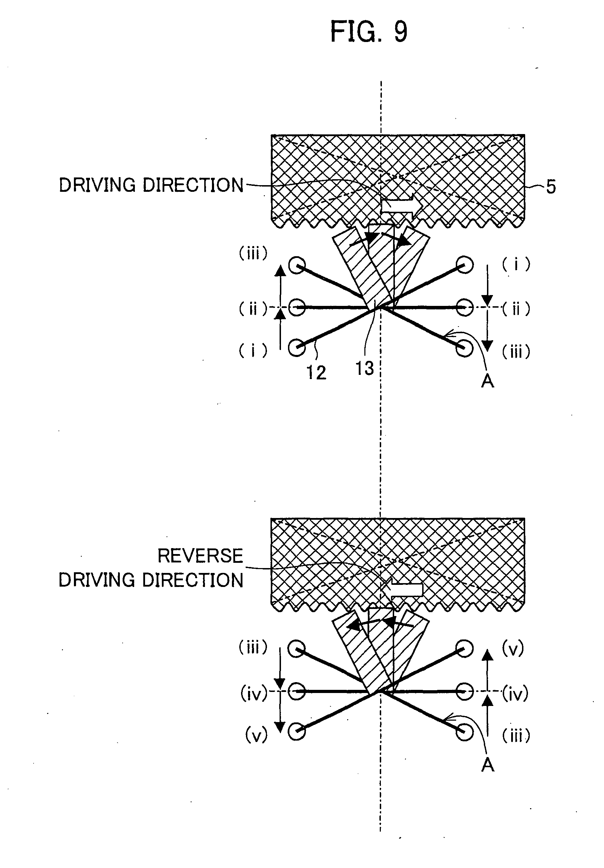

Explained next is another exemplary operation for driving the lens barrel 5, by use of the first frictional member 13 and the second frictional member 23, to move in the optical axis direction by exciting the first flex movement member 11 and the second flex movement member 21 so that the flex movement member exhibits flex movement. According to the foregoing operation, ends (i.e. parts in friction engagement with the lens barrel 5: contact sections) of the first and second frictional members 13 and 23 are driven to arc movement. FIG. 8 shows exemplary waveforms of driving voltages applied to the first flex movement member 11 and the second flex movement member 21. FIG. 9 is an explanatory diagram explaining how the first elastic member 12 and an end section of the first frictional member 13 are driven to move along an arc in accordance with the driving voltage waveforms illustrated in FIG. 8. FIG. 9 shows the present driving device viewed in the x-axis direction. The driving of the second elastic member 22 and the end section of the second frictional member 23 are identical with the driving illustrated in FIG. 9, and therefore will not be explained below. Further, in FIG. 9, that surface of the first elastic member 12 which faces the first frictional member 13 is indicated as a surface A.

According to FIG. 8, the waveforms of the driving voltage applied to the first flex movement member 11 is termed "waveform A", whereas the waveform of the driving voltage applied to the second flex movement member 21 is termed "waveform B". Additionally, the driving voltage waveform A and B are outputted from the first driving circuit 18 and the second driving circuit 28, respectively. As illustrated in FIG. 8, the waveforms A and B are sawtooth driving voltage waveforms, and are signal waveforms that shift in phase from each other by 180 degrees. FIG. 9 shows the positions of the surface A with respect to moments (i) to (v) in the waveform A and B in illustrated in FIG. 8.

As illustrated in FIG. 9, when the first flex movement member 11 and the second flex movement member 21 are driven in accordance with the waveforms A and B, the surface A is shifted in the numerical order from (i) to (v). Specifically, the surface A lies: in the position (i) of FIG. 9 at the moment (i) of FIG. 8; in the position (ii) of FIG. 9 at the moment (ii) of FIG. 8; in the position (iii) of FIG. 9 at the moment (iii) of FIG. 8; in the position (iv) of FIG. 9 at the moment (iv) of FIG. 8; in the position (v) of FIG. 9 at the moment (v) of FIG. 8. Since the plane is shifted through the transition from (i) to (v) as illustrated in FIG. 9, the end section of the first frictional member 13 is driven to move along the arc as illustrated in FIG. 9.

The end of the first frictional member 13 is driven to make the arc movement in accordance with the sawtooth driving voltage waveforms illustrated in FIG. 8. Consequently, the angular velocity in the driving direction and the angular velocity in the reverse driving direction are different (i.e. the angular velocity in the transition from (i) to (iii) is comparatively slow, whereas the angular velocity in the transition from (iii) to (v) is comparatively fast).

The foregoing description assumes an elastic member and a frictional member as separate members. However, an arrangement in which the elastic member and the frictional member are integrated with each other falls within the scope of the present invention.

Further, the foregoing description assumes an elastic member and a flex movement member as separate members. However, an arrangement in which the elastic member and the flex movement member are integrated with each other falls within the scope of the present invention. An example of such an arrangement is an arrangement in which the elastic member is formed as an extension of a shim serving as an intermediate layer of the flex movement member.

Further, an arrangement in which the elastic member is connected to a piezoelectric element of the flex movement member falls within the scope of the present invention.

It should be noted that the driving device of the present invention can be expressed as follows.

That is, the present driving device can be expressed as a driving device including: a flex movement member that exhibits flex movement when excited by electronic control; an elastic member connected to the flex movement member; a first fixing member; a second fixing member connected to the elastic member; first and second frictional members, connected to the elastic member, which make contact with a driven body.

Further, the present driving device can be expressed as a driving device in which the first fixing member is disposed on the center of gravity of the flex movement member.

Further, in addition to the above arrangement, the present driving device can be expressed as a driving device in which the first and the second frictional members are disposed symmetrically with each other with respect to the center of gravity of the flex movement member.

Further, in addition to the above arrangement, the present driving device can be expressed as a driving device in which the first fixing member and the second fixing member are identical.

Further, in addition to the above arrangement, the present driving device can be expressed as a driving device in which an advance pressure section is connected to the elastic member or the driven body.

Further, the present driving device can be expressed as a driving device including: first and second flex movement members that exhibit flex movement when excited by electronic control; an elastic member connected to the first and second flex movement members; a fixing member; and first and second frictional members, connected to the elastic member, which make contact with a driven body.

Further, in addition to the above arrangement, the present driving device can be expressed as a driving device in which the first and second flex movement members are disposed on the same plane.

Further, in addition to the above arrangement, the present driving device can be expressed as a driving device in which the fixing member is disposed on the center of gravity of the first and second flex movement members.

Further, in addition to the above arrangement, the present driving device can be expressed as a driving device in which the first and second frictional members are disposed symmetrically with each other with respect to the center of gravity of the first and second flex movement members.

Further, in addition to the above arrangement, the present driving device can be expressed as a driving device in which an advance pressure section is connected to the elastic member or the driven body.

The present invention is not limited to the description of the embodiments above, but may be altered by a skilled person within the scope of the claims. An embodiment based on a proper combination of technical means disclosed in different embodiments is encompassed in the technical scope of the present invention.
As described above, a driving device according to the present invention includes a driving mechanism for driving a driven body, the driving mechanism including: a flex movement member that exhibits flex movement when excited by electronic control; a first fixing member for fixing a part of the flex movement member, both ends of which sandwich the part fixed by the first fixing member and bend; and a driving direction changing member, connected to the both ends of the flex movement member, which changes a movement direction to a direction different from a flex movement direction of the both ends of the flex movement member and makes contact with the driven body to drive the driven body in the movement direction thus changed.

This makes it possible to design the driving device so that the size of the driving device in the driving direction is small in comparison with that of a conventional driving device, thereby making it possible to make the driving device shorter in height.

The driving device of the present invention may be arranged so as to further include a second fixing member for fixing the driving direction changing member.

According to the above arrangement, the second fixing member fixes the driving direction changing member. This makes it possible to easily distort or bend the driving direction changing member in accordance with bending of the flex movement member. It should be noted that the location in the second fixing member at which the driving direction changing member is fixed is not limited as long as the driving direction changing member is distorted or bent and the driven body can be driven in a direction different from the flex movement direction.

The driving device according to the present invention is preferably arranged such that the first and the second fixing members are integrated with each other.

This makes it possible to fix the flex movement member and the driving direction changing member by a single member, thereby making it possible to reduce erection tolerance and costs.

The driving device according to the present invention preferably includes controlling means, having a driving circuit for applying a driving voltage to the flex movement member, which controls flex movement of the both ends of the flex movement member, wherein the driving circuit receives a driving voltage having a rectangular waveform.

This makes it possible to control the driving direction of the driven body driven by the driving direction changing member connected to the both ends of the flex movement member. Specifically, when the driving circuit receives a driving voltage having a rectangular waveform, the driving circuit outputs a driving voltage having a waveform deformed due to the response of the flex movement member to driving. As a result, the driving circuit outputs, to the flex movement member, a driving voltage that periodically alternates between positive charge and negative charge (e.g., a sawtooth driving voltage). This makes it possible to bend the both ends of the flex movement member back and forth (in the flex movement direction), thereby making it possible to more easily to move that part of the driving direction changing member which makes contact with the driven body.

The driving device according to the present invention is arranged such that the flex movement members includes first and second flex movement members; and the flex movement direction of the both ends of the first flex movement member and the flex movement direction of the both ends of the second flex movement member are opposite to each other.

According to the above arrangement, the flex movement direction of the both ends of the first flex movement member and the flex movement direction of the both ends of the second flex movement member are opposite to each other. This makes it possible to distort or bend the driving direction changing member by the flex movement of the both ends of each of the first and the second flex movement members and thereby move, in a plane orthogonal to the flex movement directions, that part of the driving direction changing member which makes contact with the driven body.

The driving device according to the present invention is preferably arranged such that the first and second flex movement members are disposed on an identical plane.

This makes it possible to fix the first and the second flex movement members onto only one plane of the first fixing member, and thus the driving device can be made thinner.

The driving device according to the present invention preferably includes controlling means, having a first driving circuit for applying a driving voltage to the first flex movement member and a second driving circuit for applying a driving voltage to the second flex movement member, which controls the flex movement of the both ends of each of the first and second flex movement members, wherein the driving voltage applied by the first driving circuit and the driving voltage applied by the second driving circuit have waveforms that differ in phase from each other.

According to the above arrangement, the driving voltage applied by the first driving circuit and the driving voltage applied by the second driving circuit have waveforms that differ in phase from each other. This makes it possible that the flex movement direction of the first flex movement member and the flex movement direction of the second flex movement member are made opposite to each other. This makes it possible to efficiently move, in a direction different from the flex movement directions, that part of the driving direction changing member which makes contact with the driven body.

The driving device according to the present invention is preferably arranged such that the driving voltage applied by the first driving circuit and the driving voltage applied by the second driving circuit have waveforms shifted in phase from each other by 90 degrees.

According to the above arrangement, the driving voltage applied by the first driving circuit and the driving voltage applied by the second driving circuit are have waveforms shifted in phase from each other by 90 degrees. Therefore, that part of the driving direction changing member which makes contact with the driven body can be driven to oval movement in a direction different from the flex movement directions.

The driving device according to the present invention is preferably arranged such that the driving voltage applied by the first driving circuit and the driving voltage applied by the second driving circuit have waveforms shifted in phase from each other by 180 degrees.

According to the above arrangement, the driving voltage applied by the first driving circuit and the driving voltage applied by the second driving circuit have waveforms shifted in phase from each other by 180 degrees. Therefore, that part of the driving direction changing member which makes contact with the driven body can be driven to arc movement in a direction different from the flex movement directions.

The driving device according to the present invention is preferably arranged such that the driving voltage applied by the first driving circuit and the driving voltage applied by the second driving circuit have rectangular waveforms.

This makes it possible to control the driving direction of the driven body driven by the driving direction changing member connected to the both ends of each of the first and the second flex movement members.

The driving device according to the present invention is preferably arranged such that the first fixing member is disposed on the center of gravity of the flex movement member.

According to the above arrangement, the first fixing member is disposed on the center of gravity of the flex movement member. This makes it possible to bend the flex movement member symmetrically with respect to the center of gravity.

The driving device according to the present invention is preferably arranged such that the driving direction changing member includes a first driving direction changing member connected to one of the both ends of the flex movement member and a second driving direction changing member connected to the other end; and the first and the second driving direction changing members make contact with the driven body by contact sections disposed symmetrically with each other with respect to the center of gravity the flex movement member.

According to the above arrangement, that part of the first driving direction changing member which makes contact with the driven body and that part of the second driving direction changing member which makes contact with the driven body are disposed symmetrically with each other with respect to the flex movement member. This makes it possible to drive the two contact sections to exhibit the same movement symmetrically. The above arrangement makes it possible to remove redundant movement components except those acting in the driving direction and thereby drive the driven body more stably in the driving direction.

The driving device according to the present invention preferably includes an advance pressure member for exerting advance pressure on the driving direction changing member or the driven body so that the driving direction changing member and the driven body are in constant contact.

This makes it possible to prevent the driven body from moving in a direction different from the driving direction and thereby drive the driven body more stably.

The driving device according to the present invention preferably includes a housing capable of covering the flex movement member and the driving direction changing member, wherein the flex movement member is disposed along a side wall of the housing.

Especially, by disposing the flex movement member along the side wall of the housing as in the above arrangement, the driving device can be made shorter in height.

The present driving device can be made more compact and shorter in height, and therefore can be used for driving such a lens in an optical device as a camera lens.

The embodiments and concrete examples of implementation discussed in the foregoing detailed explanation serve solely to illustrate the technical details of the present invention, which should not be narrowly interpreted within the limits of such embodiments and concrete examples, but rather may be applied in many variations within the spirit of the present invention, provided such variations do not exceed the scope of the patent claims set forth below.

## Claims

1. A driving device including a driving mechanism for driving a driven body (5), the driving mechanism comprising:
a flex movement member (1) that exhibits flex movement when excited by electronic control;
a first fixing member (14) for fixing a part of the flex movement member, both ends of which sandwich the part fixed by the first fixing member and bend; and
a driving direction changing member (12, 13, 22, 23), connected to the both ends of the flex movement member, which changes a movement direction to a direction different from a flex movement direction of the both ends of the flex movement member and makes contact with the driven body to drive the driven body in the movement direction thus changed.

2. The driving device according to claim 1, further comprising a second fixing member (24) for fixing the driving direction changing member (12, 13, 22, 23).

3. The driving device according to claim 2, wherein the first and the second fixing members (14, 24) are integrated with each other.

4. The driving device according to one of claim 1 to 3, further comprising controlling means, having a driving circuit (8) for applying a driving voltage to the flex movement member, which controls flex movement of the both ends of the flex movement member, wherein
the driving circuit receives a driving voltage having a rectangular waveform.

5. The driving device according to claim 1, wherein:
the flex movement members includes first and second flex movement members (11, 21); and
the flex movement direction of the both ends of the first flex movement member and the flex movement direction of the both ends of the second flex movement member are opposite to each other.

6. The driving device according to claim 5, wherein the first and second flex movement members (11, 21) are disposed on an identical plane.

7. The driving device according to claim 5 or 6, further comprising controlling means, having a first driving circuit (18) for applying a driving voltage to the first flex movement member and a second driving circuit (28) for applying a driving voltage to the second flex movement member, which controls the flex movement of the both ends of each of the first and second flex movement members (11, 21), wherein
the driving voltage applied by the first driving circuit and the driving voltage applied by the second driving circuit have waveforms that differ in phase from each other.

8. The driving device according to claim 7, wherein the driving voltage applied by the first driving circuit (18) and the driving voltage applied by the second driving circuit (28) have waveforms shifted in phase from each other by 90 degrees.

9. The driving device according to claim 7, wherein the driving voltage applied by the first driving circuit (18) and the driving voltage applied by the second driving circuit (28) have waveforms shifted in phase from each other by 180 degrees.

10. The driving device according to claim 7, wherein the driving voltage applied by the first driving circuit (18) and the driving voltage applied by the second driving circuit (28) have rectangular waveforms.

11. The driving device according to claim 1, wherein the first fixing member (14) is disposed on a center of gravity of the flex movement member (1).

12. The driving device according to claim 1, wherein:
the driving direction changing member includes a first driving direction changing member (12, 13) connected to one of the both ends of the flex movement member and
a second driving direction changing member (22, 23) connected to the other end; and
the first and the second driving direction changing members make contact with the driven body by contact sections disposed symmetrically with each other with respect to a center of gravity the flex movement member (1).

13. The driving device according to claim 1, further comprising an advance pressure member for exerting advance pressure on the driving direction changing member (12, 13, 22, 23) or the driven body (5) so that the driving direction changing member and the driven body are in constant contact.

14. The driving device according to claim 1, further comprising a housing (7) capable of covering the flex movement member (1) and the driving direction changing member (12, 13, 22, 23), wherein
the flex movement member is disposed along a side wall of the housing.
